# EUROPEAN PATENT APPLICATION

(11) **EP 3 435 660 A1**
(43) Date of publication of application: **30.01.2019**
(21) Application number: 17769946.9
(22) Date of filing: 09.03.2017
(51) Int. Cl.: H04N 5/64, G02B 27/02

(54) **HEAD-MOUNTED DISPLAY**

(30) Priority: 25.03.2016 JP 2016061464
(71) Applicant: Brother Kogyo Kabushiki Kaisha, Nagoya-shi, Aichi 467-8561 (JP)
(72) Inventor: KUSUDA, Miyuki, Nagoya-shi Aichi 467-8561 (JP)
(74) Representative: J A Kemp
(86) International application number: PCT/JP2017/009426
(87) International publication number: WO 2017/163901

(57) **Abstract**

The present disclosure provides a head-mounted display that improves usability for a user. An HMD 1 includes a display device 11. The display device 11 has a lens unit on which an image is displayed, and an image unit configured to form an image to be displayed on the lens unit. A first ball joint 2 connects a mounting fixture 8 with a connection fixture 9. A second ball joint 3 connects the connection fixture 9 with the display device 11. A first center line 991 of a movable range of the first ball joint 2 and a second center line 992 of a movable range of the second ball joint 3 extend in the same direction with respect to the connection fixture 9. An optical axis 97 of the image unit and a surface of the lens unit from which an image is emitted perpendicularly intersect with each other. The display device 11 is placed at a position where the optical axis 97 becomes parallel to a visual axis 98 of an optical pupil 89.

## Description

### TECHNICAL FIELD

The present disclosures relate to a head-mounted display which can be worn on a head of a user, and make the user visually recognize an image.

### BACKGROUND ART

Conventionally, there has been known a head-mounted display which can be worn on a head of a user, and make the user visually recognize an image. For example, an image display device described in Patent Document 1 has a display unit configured to form an image on a visual axis of a right eye of the user. One side of an arm is connected to a head mounting fixture to be worn on the head of the user, while the other side of the arm is connected to the display unit. The display unit is connected, with a first connection mechanism, to the arm so as to have freedom in vertical rotation direction about an end of the arm. The arm is connected, through a second connection mechanism, to the head mounting fixture, so as to have freedom in the vertical rotation direction. The arm has a groove-like outer sliding part and an inner sliding part having a shape that engages with the groove, and is extendable/contractable.

### PRIOR ART DOCUMENT

### PATENT DOCUMENTS

[Patent Document 1] Japanese Patent Provisional Publication No. 2004-80679

### SUMMARY OF THE INVENTION

### PROBLEM TO BE SOLVED

However, when a display part is moved to be placed in front of an eye, or moved to a position other than the position in front of the eye, it is necessary to rotate the arm in the vertical direction, rotate the display unit in the vertical direction, and further expand/contract the arm. Therefore, there could be a case where an operation to move the display part to a position in front of the eye or to a position other than the position in front of the eye is troublesome. If a configuration in which the optical axis of an image forming part which forms an image and a visual axis of a visual line are parallel to each other is employed, the casing of the display part is placed in front of the eye of the user. Accordingly, there could occur a case where the user moves the display part off the eye of the user to confirm surrounding condition. That is, it is possible that the user frequently performs operations to move the display part to a position in front of the eye of the user and move the display part off the eye. Therefore, it is possible that, if the operations to move the display part to a position in front of the eye or to a position other than the position in front of the eye is troublesome, usability for the user may further be lowered.

An object of the present disclosures is to provide a head-mounted display with which usability for a user is improved.

### MEANS FOR SOLVING THE PROBLEM

A head-mounted display according to the present disclosures includes a mounting part configured to be wearable on a head of a user, an image forming part configured to form an image, a display unit having a display part configured to display an image, an image forming part provided to the display unit and configured to form an image to be displayed on the display part, a supporting part configured to support the display unit, a first joint connecting the mounting part with the supporting part, and a second joint connecting the supporting part with the display unit. A first center line and a second center line extend in the same direction with respect to the supporting part, the first center line being a center line of a movable range of the first joint and the second center line being a center line of a movable range of the second joint. An optical axis of the image forming part perpendicularly intersects with a surface of the display part configured to emit the image. The display unit is placed at a position where the optical axis becomes parallel to a visual axis of an optical pupil.

In such a case, the supporting part is movable via the first joint and the second joint. With this configuration, it is possible to place the surface of the display part in front of the eye of the user without expanding/contracting the supporting part. Further, since the first center line and the second center line extend in the same direction with respect to the supporting part, in comparison with a case where they extend in different directions, a movable range of the display unit with respect to the mounting part can be made wider. Accordingly, if the display unit is configured such that the optical axis is parallel to the visual axis, and the optical axis perpendicularly intersects the surface of the display part, the user can easily place the display unit in front of the eye of the user and move the display unit at a position other than the position in front of the eye of the user. Therefore, usability for the user is improved.

In the head-mounted display, a direction where the second center line extends may intersect with the optical axis. Since the movable range of the display unit is wide, even if the direction in which the second center line extends is arranged to intersect with the optical axis, the user can easily place the display unit in front of the eye of the user. Therefore, the usability for the user is improved.

The head-mounted display may further include an adjustment part provided to the display unit and configured to perform adjustment regarding displaying of the image output by the image forming part. Since the movable range of the display unit is wide, it is easy to place the display unit in front of the eye, and further, the adjustment regarding displaying of the image can be performed by adjusting the adjustment mechanism. Therefore, the usability for the user is improved.

The head-mounted display may further include a casing forming an appearance of the display unit, a longitudinal direction of the casing being parallel to the optical axis, and an attaching/detaching mechanism provided to the casing and capable of detachably attaching a mirror part having a reflective surface configured to reflect light from the image forming part. The attaching/detaching mechanism may be configured to attach the reflective surface on a side in a direction directed from the image forming part to the display part, with the reflective surface being inclined with respect to the optical axis. In such a case, the head-mounted display includes the attaching/detaching mechanism to which the mirror part can be detachably attached. Therefore, the head-mounted display allows the user to select a case where the user visually recognizes the image output by the image forming part and displayed through the display part directly and a case where the mirror part is attached and the user visually recognizes the image reflected by the reflective surface depending on a purpose of usage. Therefore, in comparison with a case where the image display modes cannot be selected depending on the purpose of usage, the usability for the user is improved.

The head-mounted display may further include a connection member configured to connect the second joint with the display unit. When the mirror part is detached from the casing via the attaching/detaching mechanism, the connection member may connect the display unit such that the optical axis intersects with a direction where the second center line extends. When the mirror part is attached to the casing via the attaching/detaching mechanism, the connection member may connect the display unit such that a direction where the optical axis extends becomes the same as the direction where the second center line extends. When the mirror part is detached from the display unit via the attaching/detaching mechanism, the connection member connects the display unit such that the optical axis and the direction where the second center line extends intersect with each other. With this configuration, the surface of the display part can easily be placed in front of the eye of the user. Further, when the mirror part is attached to the display unit via the attaching/detaching mechanism, the connection member connects the display unit such that the direction where the optical axis extends and the direction where the second center line extends become the same. With this configuration, the mirror part can easily be placed in front of the eye of the user. That is, in either of a case where the user directly views the surface of the display part, or a case where the user views an image through the mirror part, a portion on which the image is displayed can easily be placed in front of the eye of the user. Accordingly, the usability for the user is improved.

The head-mounted display may further include a recess provided to the attaching/detaching mechanism and configured to engage with an engagement part provided to the mirror part. In such a case, positioning of the mirror part can be performed by engaging the engagement part of the mirror part with the recess. Further, since a portion with which the mirror part is engaged is the recess, when the mirror part is detached from the display unit, the portion does not protrude from the display unit. Therefore, for example, in comparison with a case where there is a protruding portion, protruding from the display unit, with which the mirror part is engaged, it is safer even if the user moves a portion of the attaching/detaching mechanism of the display unit closer to the eyes of the user.

The head-mounted display may further include a cover attachment/detachment part provided to the casing and configured to detachably attach a cover part which is arranged around the casing to block external light. In such a case, since the external light can be blocked by the cover part, visibility of the image from the display part is improved.

In the head-mounted display, the mounting part may be an arc-shaped part which can be worn along the head of the user, and the first joint may be supported by the mounting part. In such a case, the head-mounted display is fixed to the head with the arc-shaped mounting part, and a position of the first joint is fixed. Therefore, in comparison with a case where the user can freely determine an attached position, such as, for example, a case where the mounting part is mounted on a brim part of a hat or the like, the position of the display part can be stabilized. Therefore, the user can easily place the display unit in front of the eye of the user. Accordingly, the usability for the user is improved.

### BRIEF DESCRIPTION OF THE DRAWINGS

[Fig. 1] Fig. 1 is a perspective view of a non-transmission type HMD 1 when a display device 11 is placed in front of and in a neighborhood of an eye of a user.
[Fig. 2] Fig. 2 is a perspective view of the non-transmission type HMD 1 when the display device 11 is placed in front of and in a neighborhood of the eye of the user.
[Fig. 3] Fig. 3 is a perspective view of the display device 11.
[Fig. 4] Fig. 4 is an exploded perspective view showing inside of the display device 11.
[Fig. 5] Fig. 5 is a front view of a connection fixture 9.
[Fig. 6] Fig. 6 is an exploded perspective view of the connection fixture 9, a first ball joint 2 and a connection member 70.
[Fig. 7] Fig. 7 is a perspective view of the first ball joint 2.
[Fig. 8] Fig. 8 is a cross-sectional view of the first ball joint 2.
[Fig. 9] Fig. 9 is a perspective view of a connection member 81.
[Fig. 10] Fig. 10 is a perspective view of the first ball joint 2.
[Fig. 11] Fig. 11 is a perspective view of the HMD 1 to which an eye cap 90 is attached.
[Fig. 12] Fig. 12 is a perspective view of the eye cap 90.
[Fig. 13] Fig. 13 is a perspective view of a transmission type HMD 1 when a mirror part 5 is placed in front of and in a neighborhood of the eye of the user.
[Fig. 14] Fig. 14 is a perspective view of the transmission type HMD 1 when the mirror part 5 shown in Fig. 13 is detached.
[Fig. 15] Fig. 15 is a perspective view of a mirror casing 52 of the mirror part 5.
[Fig. 16] Fig. 16 is a perspective view of a connection member 84.
[Fig. 17] Fig. 17 is a perspective view of a connection member 83.
[Fig. 18] Fig. 18 is a perspective view of a connection member 85.

### DESCRIPTION OF THE EMBODIMENTS

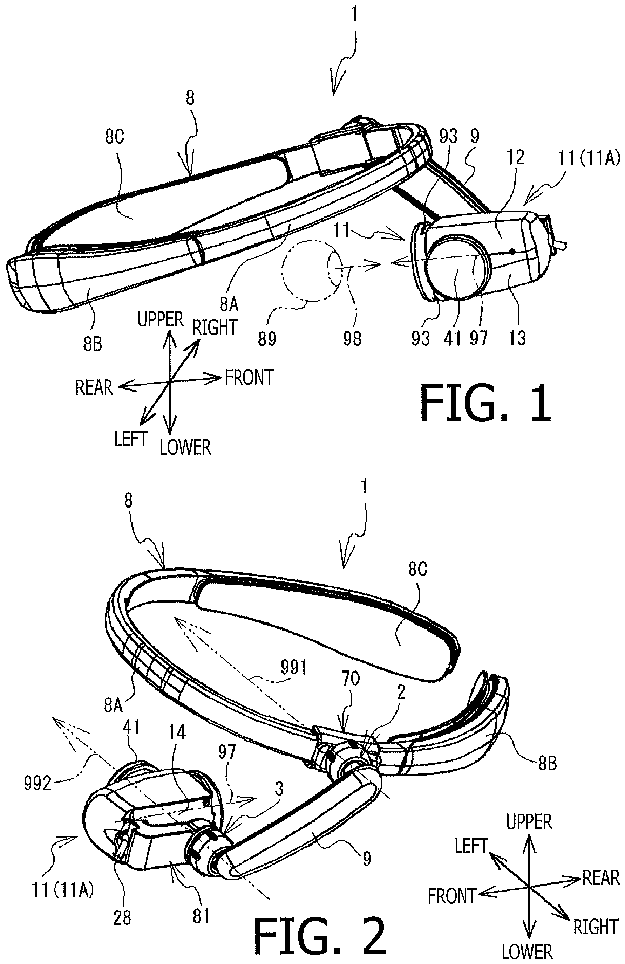

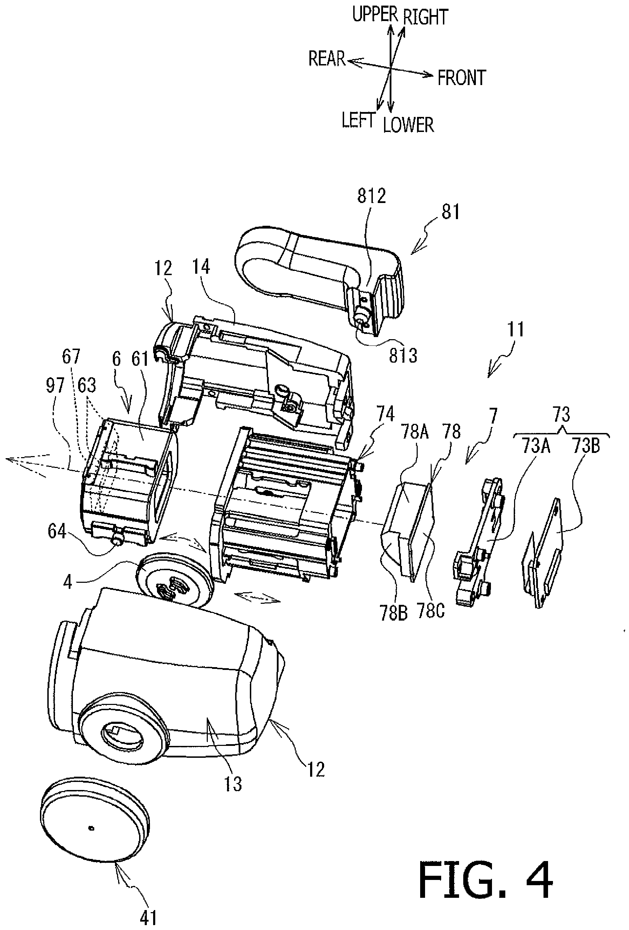

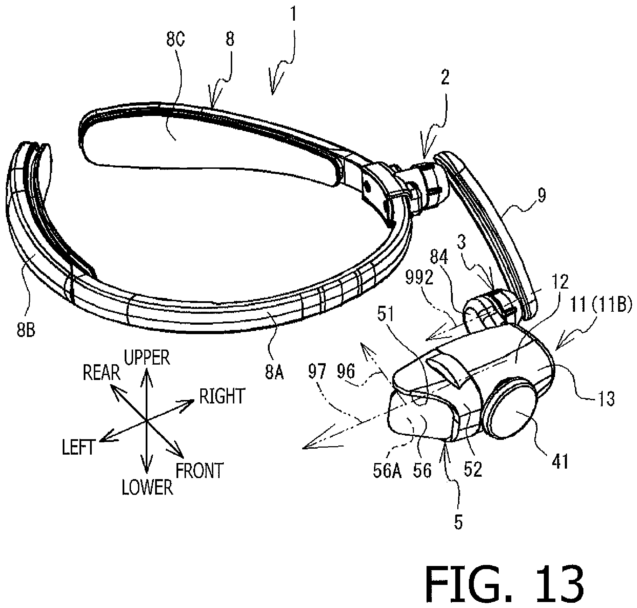

Hereinafter, referring to the drawings, an embodiment of the present disclostires will be described. A head-mounted display (hereinafter, referred to as an "HMD") 1 is an HMD of which type can be switched between a non-transmission type HMD (see Figs. 1 and 2), and a light transmission type see-through HMD (see Fig. 13; hereinafter, referred to as a "transmission type HMD"). When the HMD 1 functions as the transmission type HMD (see Fig. 13), light from a scenery in front of an eye of a user is directly introduced to the eye of the user by passing through a half mirror 56. A projection type of the HMD 1 is a virtual image projection type. The half mirror 56 reflects light of an image displayed on an image unit 7 (see Fig. 4, described later) toward one eye of the user (see arrow 96 in Fig. 13). The HMD 1 is capable of making the user recognize the scenery in front of the eye of the user with the image superimposed.

When the HMD 1 functions as the non-transmission type HMD (see Figs. 1 and 2), light of an image displayed on the image unit 7 (see Fig. 4, described later) is visually recognized by the user directly through a lens unit 6 (see Fig. 4), which is a display part, without being reflected by the half mirror or the like. Therefore, the image of the HMD 1 is not superimposed with the scenery in front of the eye of the user.

Firstly, a case where the HMD 1 is a non-transmission type HMD will be described. The HMD 1 has a display device 11, a mounting fixture 8 and a connecting fixture 9. Hereinafter, in order to facilitate understanding the description of the drawings, an upper side, a lower side, a left side, a right side, a front side and a rear side of the HMD 1 will be defined. The upper side, the lower side, the rear side, the front side, the left side and the right side of the HMD 1 respectively correspond, for example, to an upper side, a lower side, a left side, a right side, a diagonally lower left side and a diagonally upper right side indicated in Fig. 1. It is noted that the upper side, the lower side, the rear side, the front side, the left side and the right side of the HMD 1 respectively correspond to an upper side, a lower side, a rear side, a front side, a right side and a left side of the user wearing the mounting fixture 8.

As shown in Figs. 1 and 2, the mounting fixture 8 can be worn on the head of the user. The mounting fixture 8 is made of flexible material such as resin or metal (e.g., stainless steel). The mounting fixture 8 is arc-shaped and can be worn along the head of the user. Specifically, the mounting fixture 8 has a first section 8A and second sections 8B and 8C. The first section 8A and the second sections 8B and 8C are curved and elongated plate members, respectively. The first section 8A extends in the right-left direction, and convexly curves frontward. The second section 8B extends from an end of one side (e.g., the left side) of the first section 8A. The second section 8C extends from an end of the other side (e.g., the right side) of the first section 8A. The second sections 8B and 8C extend in directions in which end portions thereof on sides opposite to the sides connected to the first section 8A (e.g., the rear side ends) approach each other. The mounting fixture 8 is worn on the head of the user in a state where the first section 8A, the second sections 8B and 8C contact a frontal region, a right temporal region and a left temporal region of the user, respectively. In this state, the first section 8A extends in the right-left direction along a forehead of the user.

The connection fixture 9 is a member supporting the display device 11. The connection fixture 9 extends in the up-down direction when viewed from the front side. Specifically, as shown in Fig. 2, the connection fixture 9 extends in a direction such that a lower end is inclined frontward with respect to the up-down direction. The connection fixture 9 is a rod like member slightly convexly curved rightward. The connection fixture 9 is formed, for example, of resin or metal. One end side (e.g., an upper side) of the connection fixture 9 is connected to the first section 8A of the mounting fixture 8. The connection fixture 9 and the mounting fixture 8 are mutually connected through a first ball joint 2. The first ball joint 2 is supported by the mounting fixture 8. The first ball joint 2 is rotatable about a first center line 991 (see Fig. 2) which is a center line of a movable range. With this configuration, the connection fixture 9 is rotatable with respect to the mounting fixture 8.

The other end side (e.g., a lower side) of the connection fixture 9 is connected to the display device 11 which will be described later. The connection fixture 9 supports the display device 11 at a position spaced from the mounting fixture 8. The connection fixture 9 and the display device 11 are mutually connected through a second ball joint 3. The second ball joint 3 is rotatable about a second center line 992 (see Fig. 2) which is a center line of the movable range. With this configuration, the display device 11 is rotatable with respect to the connection fixture 9.

The first center line 991 and the second center line 992 extend in the same direction, which is the left direction, with respect to the connection fixture. According to the present embodiment, a direction in which the first center line 991 extends and a direction in which the second center line 992 extends are substantially parallel to each other. The connection fixture 9 is capable of moving the display device 11 with use of the first ball joint 2 and the second ball joint 3 at both ends thereof.

The non-transmission type HMD 1 is configured such that, when the mounting fixture 8 is worn on the head of the user with the display device 11 being arranged below the mounting fixture 8 as shown in Figs. 1 and 2, a surface 67 (see Fig. 4; described later) for emitting an image of the lens unit 6 of the display device 11 can be placed in front of the left eye of the user. At that stage, the connection fixture 9 extends diagonally frontward and downward from a connection part with the mounting fixture 8. Further, the display device 11 is placed at a position where an optical axis 97 of an image output by the image unit 7 (see Fig. 4) and the visual axis 98 of an optical pupil 89 are parallel with each other (see Fig. 1). The position of the optical pupil 89 indicates a position at which an eyeball of a human is assumed to be placed.

As shown in Figs. 1 - 3, the display device 11 has a box-like casing 12. Figs. 1 - 2 shows the display device 11 used in the non-transmission type HMD 1. In the following description, the display device 11 used in the non-transmission type HMD 1 will occasionally be referred to as a display device 11A (see Fig. 1). Further, the display device 11 used in the transmission type HMD 1 will occasionally be referred to as a display device 11B (see Fig. 13).

As shown in Fig. 4, the casing 12 accommodates an adjustment mechanism 4, the lens unit 6 and the image unit 7. The casing 12 forms an appearance of the display device 11. A longitudinal direction of the casing 12 is parallel to the optical axis 97 of the image (see Fig. 2). The rear side of the lens unit 6 is not covered with the casing 12. A communication line 28 (see Fig. 2) is connected to the front part of the casing 12. The HMD 1 is connected to an external device (not shown) through the communication line 28. The external device supplies image data and electrical power to the HMD 1.

The casing 12 is formed by combining a first casing 13 forming a left side and a second casing 14 forming a right side. The image unit 7 is accommodated in the front part of the casing 12. The lens unit 6 is arranged on the rear side with respect to the image unit 7. The adjustment mechanism 4 is arranged on the left side with respect to the lens unit 6.

The image unit 7 forms an image corresponding to the image data received from the external device through the communication line 28 (see Fig. 2). The image as formed is displayed through the lens unit 6. The image unit 7 has a first holding member 74, a liquid crystal display device 78 and a second holding member 73. The first holding member 74 has a cylindrical shape extending in the front-rear direction. The position of the image unit 7 with respect to the casing 12 is fixed.

The liquid crystal display device 78 has a light source 78A, a light guide member 78B and a liquid crystal display element 78C. The liquid crystal display device 78 is arranged inside the cylindrical first holding member 74. The liquid crystal display element 78C has a rectangular shape. The liquid crystal display element 78C employs a reflection type displaying method. The liquid crystal display device 78 emits image rearward. The optical axis 97 of the image displayed by the image unit 7 extends in a rearward direction.

The light guide member 78B is fixed to the liquid crystal display element 78C with a display surface (not shown), which is a left surface of the liquid crystal display element 78C, being sealed (e.g., closely contacted) with a sealing member. The light guide member 78B efficiently reflects the light incident from above to the rear side, while allows the light incident from the front side to efficiently pass therethrough to proceed rearward. The light guide member 78B is a polarization beam splitter, which allows, for example, one of two polarization components orthogonally crossing each other to pass therethrough, while reflects the other. The light source 78A is connected to an upper surface of the light guide member 78B. In the liquid crystal display device 78, the light radiated from the light source 78A passes through a not-shown diffusion plate and is dispersed to be light evenly disturbed within a plane. Further, the light passed through the diffusion plate passes through a not-shown polarizing plate and is linearly polarized. The light passed through the polarizing plate is reflected toward the liquid crystal display element 78C by the light guide member 78B, and is incident on the liquid crystal display element 78C. The incident light is reflected by the display surface of the liquid crystal display element 78C. The reflected light corresponds to the image light of the image displayed on the display surface of the liquid crystal display element 78C.

The second holding member 73 has a holding part 73A and a control substrate 73B. The holding part 73A is arranged on the front side with respect to the liquid crystal display element 78C. The control substrate 73B is arranged on the front side of the holding part 73A. The control substrate 73B is connected to the liquid crystal display element 78C through a flexible printed substrate (not shown). The communication line 28 is connected to the control substrate 73B. The control substrate 73B receives the image data transmitted by the external device through the communication line 28. The control substrate 73B causes the image unit 7 to display the image corresponding to the image data by transmitting a control signal to the liquid crystal display element 78C through the flexible printed substrate.

The lens unit 6 is arranged on a downstream side of a light path of the image light with respect to the image unit 7. The lens unit 6 displays an image formed by the image unit 7 so as to be visually recognizable by the user. The liens unit 6 guides the image light emitted by the image unit 7. The lens unit 6 has a holding member 61 and a plurality of lenses 63. The holding member 61 is a substantially cylindrical member extending in the front-rear direction. The plurality of lenses 63 are fixed in the holding member 61. The plurality of lenses 63 are arranged along an axial line extending at a center of the holding member 61 in the front-rear direction. The image light passing through the lens unit 6 is collected by the plurality of lenses 63. The collected image light is emitted from a surface 67 of the most downstream lens among the plurality of lenses 63 along the light path of the image light.

On the downstream side along the light path of the image light with respect to the surface 67, a transparent member 681 is provided. The transparent member 681 is, for example, formed of a transparent synthetic resin. It is noted that such a transparent member 681 may not be provided.

On the left surface of the holding member 61, a convex portion 64 protruding leftward is provided. The convex portion 64 engages with the adjustment mechanism 4 described later. The lens unit 6 is held by the casing 12 so as to be movable in the front-rear direction. At least a part of the front part of the holding member 61 is fitted in at least a part of the rear part of the first holding member 74.

The operation member 41 is a disk-like member. A central shaft (not shown) of the operation member 41 extends rightward. The operation member 41 is rotatable about the central shaft. The central shaft of the operation member 41 is connected to a central part, in the left side view, of the adjustment mechanism 4. The convex portion 64 engages with the adjustment mechanism 4 at a part slightly outside the center, in the right side view, of the adjustment mechanism 4.

The adjustment mechanism 4 is rotatable integrally with the operation member 41 about an axis extending in the right-left direction. The operation member 41 and the adjustment mechanism 4 are members for adjusting relative positions of the lens unit 6 and the image unit 7 to perform diopter adjustment.

Movement of the lens unit 6 when the user rotates the operation member 41 to perform the diopter adjustment will be described. When the operation member 41 is rotated clockwise, in the left side view, the adjustment mechanism 4 is rotated clockwise in the left side view in accordance with rotation of the operation member 41. Then, a frontward force is applied to the convex portion 64, and the convex portion 64 moves frontward. In association with the movement of the convex portion 64, the lens unit 6 moves frontward.

When the operation member 41 is rotated counterclockwise in the left side view, the adjustment mechanism 4 rotates counterclockwise in the left view in association with the rotation of the operation member 41. Then, a rearward force is applied to the convex portion 64, and the convex portion 64 moves rearward. In association with the movement of the convex portion 64, the lens unit 6 moves rearward.

It is noted that, when the lens unit 6 moves in the front-rear direction, by the plurality of lenses 63, a spread angle of the image light, which is visually recognized as a virtual image by the user, varies. Accordingly, by rotating the operation member 41, the user can perform the diopter adjustment.

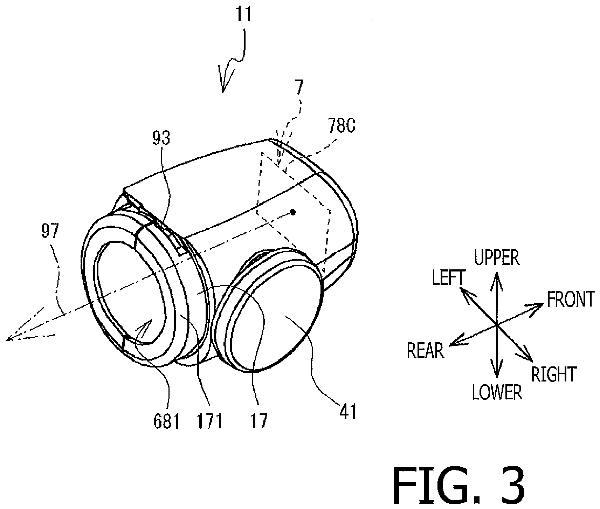

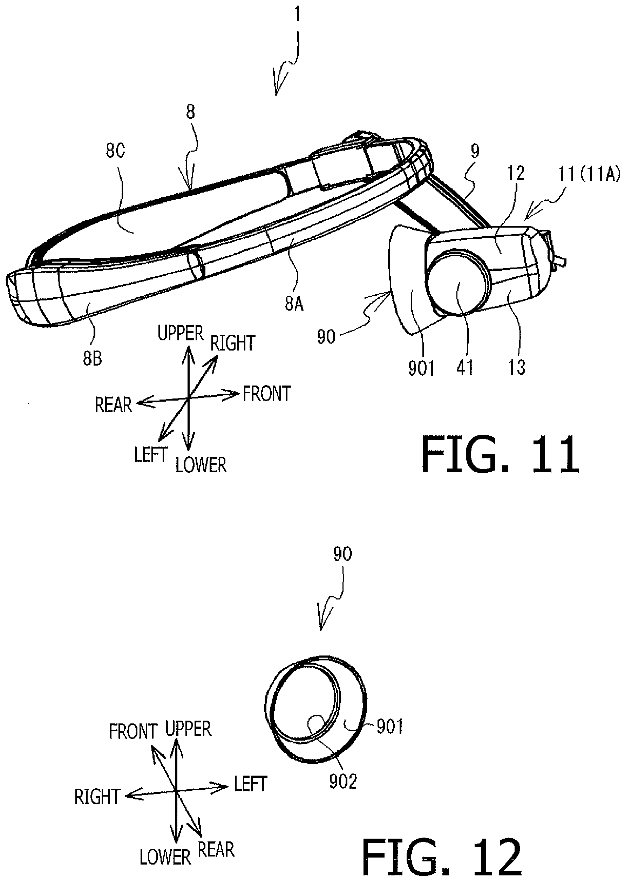

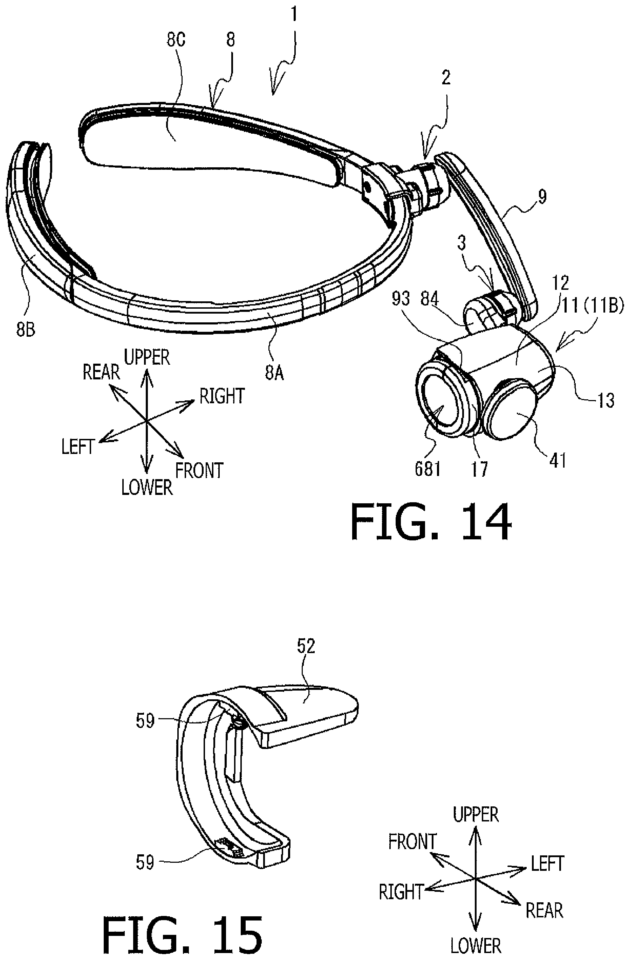

As shown in Fig. 3, on a rear end part of the casing 12, a cylindrical attachment/detachment part 17 is provided. The transparent member 681 is arranged inside the attachment/detachment part 17. The attachment/detachment part 17 is a part at which the mirror part 5 (see Fig. 13) or an eye cap 90 (see Fig. 11), which will be described later, is attached/detached. On a rear end part of an outer circumferential surface of the attachment/detachment part 17, a taper 171 is formed to incline such that a more rearward portion of the taper 171 is located at a more inward position in a diameter direction. On the upper side and lower side of the attachment/detachment part 17, recesses 93, which are formed such that outer surfaces of the attachment/detachment part 17 are recessed in the diameter direction, are provided (see Figs. 1 and 3). The recesses 93 are portions where mirror engagement parts 59 provided to a mirror part 5 (see Fig. 15), which will be described later, engage.

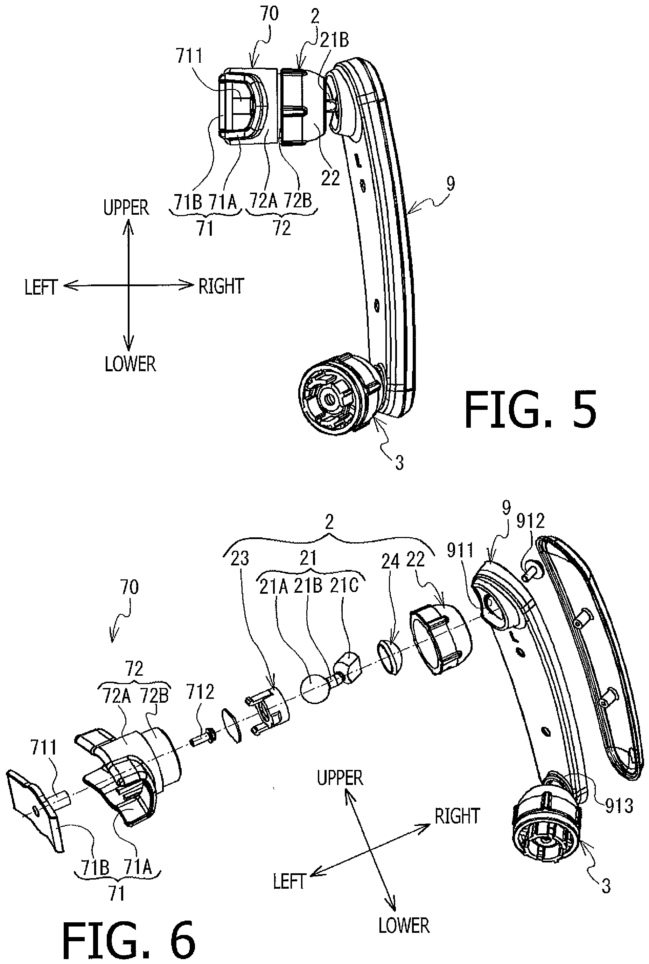

A configuration of connection between the connection fixture 9 and the mounting fixture 8 will be described. The connection fixture 9 is connected to the mounting fixture 8 by the first ball joint 2 and a connection member 70 provided to the mounting fixture 8. As shown in Figs. 5 and 6, the connection member 70 has a connection section 71 and a cylindrical section 72. The connection section 71 detachably connects the connection member 70 to the right front part of the mounting fixture 8 (see Figs. 1 and 2). The connection section 71 has an outer part 71A and an inner part 71B. The outer part 71A contacts the upper side, the lower side and the outer side of the mounting fixture 8. The inner part 71B contacts the inner side of the mounting fixture 8. The inner part 71B has a cylindrical protruding portion 711 protruding rightward. The outer part 71A has a not-shown hole which is pierced in the right-left direction at a portion contacting the outer side of the mounting fixture 8. As shown in Fig. 6, a screw 712 is inserted from the right toward the left in the not-shown hole of the outer part 71A. The screw 712 is screwed with the protruding portion 711 of the inner part 71B. The outer part 71A and the inner part 71B are fixed with the screw 712 with sandwiching the right front part of the mounting fixture 8.

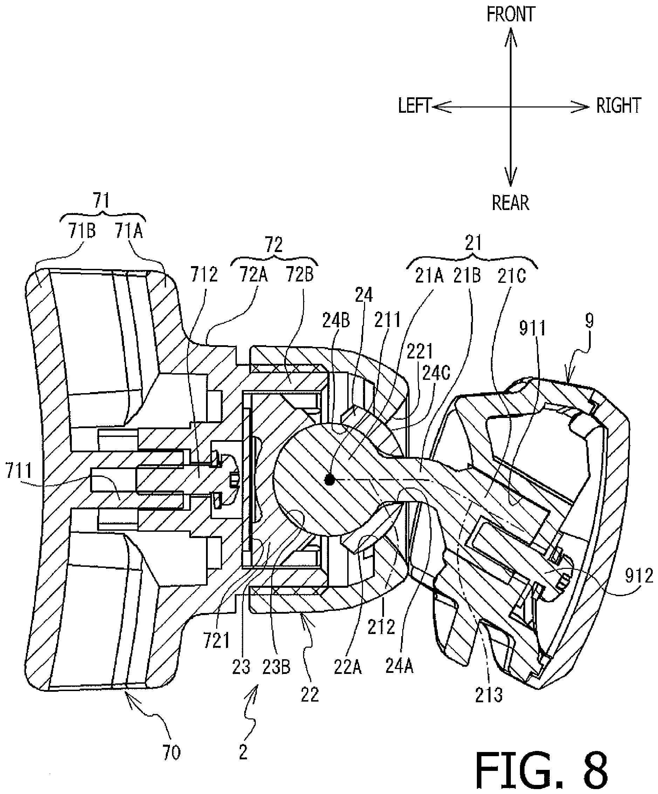

The cylindrical section 72 is a cylindrical member. The cylindrical section 72 protrudes rightward from the outer part 71A of the connection section 71. The cylindrical section 72 has a first cylindrical section 72A and a second cylindrical section 72B of which diameters of outer surfaces are different. The second cylindrical section 72B is arranged on the right side with respect to the first cylindrical section 72A. The diameter of the outer surface of the second cylindrical section 72B is smaller than the diameter of the outer surface of the first cylindrical section 72A. A space is formed inside the second cylindrical section 72B. The left end of the second cylindrical section 72B is closed with a bottom part 721 (see Fig. 8). A screw thread is formed on the outer surface of the second cylindrical section 72B. A socket 22 of the first ball joint 2 is connected to the second cylindrical section 72B.

As shown in Figs. 6 - 8, the first ball joint 2 has a first ball stud 21, the socket 22, an accommodation section 23 and a pressing section 24. The first ball stud 21 has a sphere section 21A, a rod section 21B and a base section 21C. The sphere section 21A is a portion having a spherical shape. The rod section 21B is a cylindrical portion extending rightward from the sphere section 21A. A diameter of a cross section of the rod section 21B is smaller than the diameter of the sphere section 21A. As shown in Fig. 8, the rod section 21B extends along an imaginary line 212 which radially extends from the center 211 of the sphere section 21A, is bent to a diagonally right rear direction, and further extends along an imaginary line 213. The base section 21C is connected to a part of the rot section 21B opposite to the sphere section 21A side. As shown in Fig. 6, a recess 911 is proved at an upper end part of a left surface of the connection fixture 9. As shown in Fig. 8, the base section 21C of the first ball stud 21 is fitted in the recess 911 from the left side. On the bottom of the recess 911, a not-shown hole being pierced in the right-left direction is formed. In the hole, the screw 912 is inserted from the right side toward the left side. The screw 912 is screwed in a screw hole provided to the base section 21C of the first ball stud 21. With the above configuration, the first ball stud 21 is fixed to the connection fixture 9 with the screw 912.

The accommodation section 23 is accommodated inside the second cylindrical section 72B of the connection member 70. The accommodation section 23 is an elastically deformable rubber functioning as a shock absorber. A left side surface of the accommodation section 23 contacts the bottom part 721 of the second cylindrical section 72B. A right side surface of the accommodation section 23 is formed with a recess 23B which is recessed circularly. The recess 23B contacts, from the left side, a part of a substantially left half of the sphere section 21A of the first ball stud 21. The pressing section 24 has a hemispheric shape. An opening of the pressing section 24 faces leftward. The pressing section 24 has a circular hole 24A which is pierced in the right-left direction. The rod section 21B of the first ball stud 21 is inserted through the hole 24A. The diameter of the hole 24A is substantially the same as the diameter of the cross-section of the rod section 21B of the first ball stud 21. A wall part 24B corresponding to an inner side surface of the pressing section 24 contacts, from the right side, a part of a substantially right half of the sphere section 21A of the first ball stud 21. The sphere section 21A is sandwiched, from both sides in the right-left direction, by the recess 23B of the accommodation section 23 and the wall part 24B of the pressing section 24.

The socket 22 is a cylindrical member extending in the right-left direction. An inner diameter of the socket 22 is substantially the same as an outer diameter of the second cylindrical section 72B of the connection member 70. On a left end part of the inner surface of the socket 22, a screw thread is formed. The screw thread engages with the screw thread formed on the outer surface of the second cylindrical section 72B. With this configuration, the socket 22 is connected to the connection member 70. The sphere section 21A, the accommodation section 23 and the pressing section 24 of the first ball stud 21 are accommodated in a space surrounded by the second cylindrical section 72B and the socket 22.

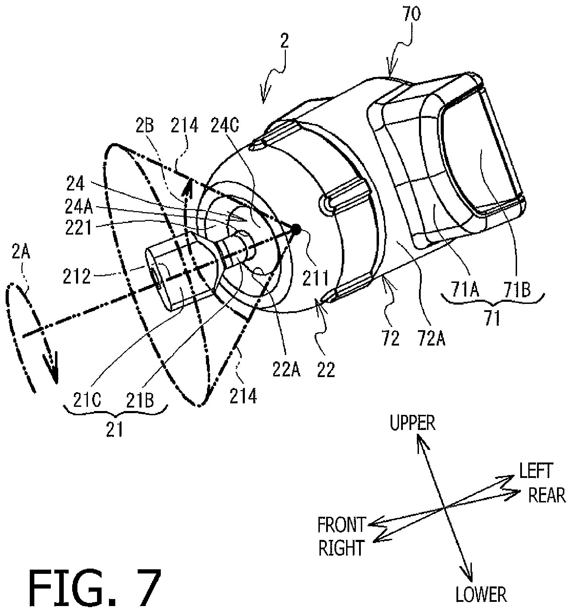

As shown in Fig. 7, a wall part 221 is provided at a right end part of the socket 22 so as to extend toward the center with being curved. The wall part 221 is formed with a circular hole 22A which is pierced in the right-left direction. The rod section 21B of the first ball stud 21 is inserted in the hole 22A. An inner surface of the hole 22A of the wall part 221 contacts an outer surface 24C of the pressing section 24 from the right side. A part of the right side of the pressing section 24 is protruded, from the hole 22A, outside the socket 22.

As shown in Fig. 8, the wall part 221 of the socket 22 presses the pressing section 24 leftward with the socket 22 being screwed with the second cylindrical section 72B of the connection member 70. The sphere section 21A of the first ball stud 21 contacting the wall part 24B of the pressing section 24 is pressed by the pressing section 24 and moved leftward, and press-contacted to the accommodation section 23. With this configuration, a state where the sphere section 21A is sandwiched, from both sides in the right-left direction, by the accommodation section 23 and the pressing section 24 is maintained.

Depending on the degree of fastening by screwing of the socket 22 with respect to the second cylindrical section 72B, a distance between the bottom part 721 of the second cylindrical section 72B and the wall part 221 of the socket 22 varies. Depending on the distance between the bottom part 721 and the wall part 221, a force with which the socket 22 presses the pressing section 24, and a force with which the accommodation section 23 and the pressing section 24 nip the sphere section 21A vary. In the present embodiment, it is assumed that, in the HMD 1, the degree of fastening by screwing of the socket 22 with respect to the second cylindrical section 72B is adjusted in advance so that the pressing section 24 is movable with respect to the socket 22, and the sphere section 21A is movable with respect to the accommodation section 23. In this case, as shown in Fig. 7, the first ball stud 21 is rotatable in a direction indicated by arrow 2A about the imaginary line 212 radially extending from the center 211 of the sphere section 21A. Further, the first ball stud 21 is movable in a direction indicated by arrow 2B within a range in which the rod section 21B does not contact the hole 22A of the wall part 221 of the socket 22, that is, within a range surrounded by a virtual conical face 214 connecting the center 211 and the inner end of the wall part 221. It is noted that, when the first ball stud 21 moves in the directions indicated by the arrows 2A and 2B, the pressing section 24 also moves in association with movement of the first ball stud 21. In contrast, when the first ball stud 21 moves in the directions indicated by the arrows 2A and 2B, the inner surface of the hole 22A of the wall part 221 of the socket 22 and the outer surface 24C of the pressing section 24 slide with respect to each other, and the surfaces of the sphere section 21A and the recess 23B of the accommodation section 23 slide with respect to each other.

The movement of the second ball stud 31 described above corresponds to a part of rotational movement about two axes which perpendicularly intersect with the imaginary line 212, and perpendicularly intersect with each other (e.g., a first axis extending in the front-rear direction and a second axis extending in the up-down direction). When the right-left direction of Fig. 7 is defined as an X axis, the front-rear direction of Fig. 7 is defined as a Y axis and the up-down direction of Fig. 7 is defined is defined as a Z axis, the movement about the imaginary line 212 is expressed as a rotation Xθ about the X axis, the movement within the conical face 214 is expressed as a composition of a rotation Yθ about the Y axis and a rotation Zθ about the Z axis. That is, the first ball joint 2 can move the first ball stud 21 with three degrees of freedom. Since the first ball stud 21 is movable, the first ball joint 2 is movable with the first center line 991 shown in Fig. 2 being the center of movement.

The display device 11 is connected to the connection fixture 9 through the connection member 81 and the second ball joint 3. As shown in Figs. 2 and 4, the connection member 81 is a substantially polygonal prism shaped member extending in the front-rear direction. As shown in Fig. 4, a front end of the connection member 81 is provided with a protruding portion 812 protruding leftward. On a left end surface of the protruding portion 812, a protruding part 813 protruding leftward is provided. As the protruding part 813 is inserted in a not-shown hole on the second casing 14, the connection member 81 is held by the display device 11.

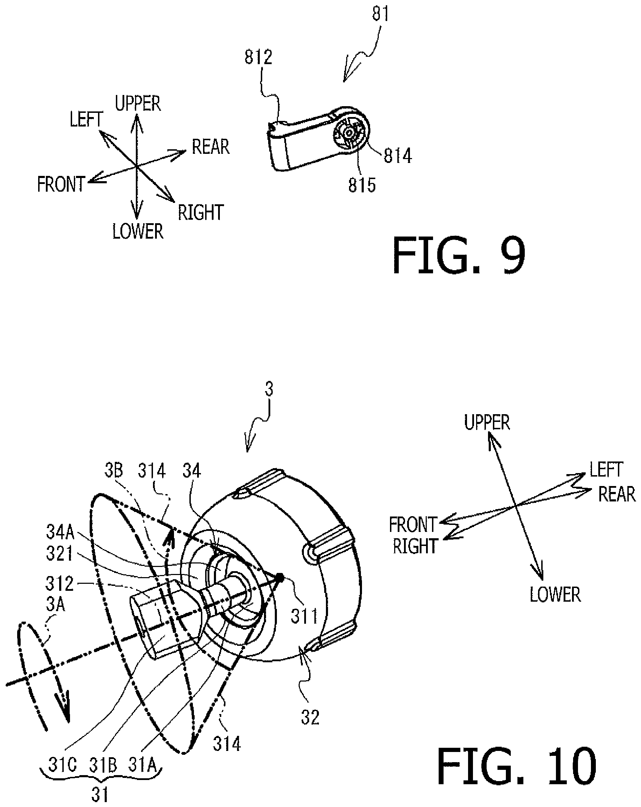

As shown in Fig. 9, on a right surface of a rear part of the connection member 81, a connection recess 814 which is a circular recess in the left side view and recessed leftward is formed. At a central part of the connection recess 814, a cylindrical section 815 extending rightward is provided. By inserting a connection section (not shown) to be connected to the second ball joint 3 between the inner surface of the connection recess 814 and the cylindrical section 815, the second ball joint 3 and the connection member 81 are connected.

As shown in Fig. 10, a configuration of the second ball joint 3 is substantially the same as that of the first ball joint 2 except for a part of the configurations. In the following description, in order to avoid duplication of the description which is the same as the description of the first ball joint 2 above, description of the second ball joint will be omitted or simplified. The second ball joint 3 has a second ball stud 31, a socket 32, an accommodation section (not shown) and a pressing section 34. The second ball stud 31, the socket 32, the accommodation section and the pressing section 34 respectively correspond to the first ball stud 21, the socket 22, the accommodation section 23 and the pressing section 24 of the first ball joint 2.

The second ball stud 31 has a sphere section 31A, a rod section 31B and a base section 31C. Shapes of the sphere section 31A, the rod section 31B and the base section 31C are the same as those of the sphere section 21A, the rod section 21B and the base section 21C of the first ball stud 21, respectively. The rod section 31B radially extends from a center 311 of the sphere section 31A, is bent to a diagonally right rear direction, and further extends. As shown in Fig. 6, a recess 913 is formed on a lower end part of the left surface of the connection fixture 9. The base section 31C (see Fig. 10) of the second ball stud 31 is fitted in the recess 913 from the left side. At the bottom of the recess 913, a not-shown hole being pierced in the right-left direction is formed. In the hole, a screw (not shown) is inserted from the right side toward the left side. The screw is screwed in a screw hole formed on the base section 31C of the second ball stud 31. With this configuration, the second ball stud 31 is fixed to the connection fixture 9 with the screw.

Although the shape of the pressing section 34 is slightly different from the shape pf the pressing section 24 of the first ball joint 2, detailed description thereof will be omitted. The shape of the socket 32 is the same as that of the socket 22 of the first ball joint 2. As shown in Fig. 10, the second ball stud 31 is capable of rotating in a direction indicated by arrow 3A about an imaginary line 312 radially extending from the center 311 of the sphere section 31A. Further, the second ball stud 31 is movable in the direction indicated by arrow 3B within a range in which the rod section 31B does not contact an opening 34A of the pressing section 34, that is, within a range surrounded by a virtual conical face 314 connecting the center 311 and an inner end of the wall part 321. When the second ball stud 31 moves in the directions indicated by the arrows 3A and 3B, an inner surface of the opening 34A of the pressing section 34 and the sphere section 31A slide with respect to each other, and the surfaces of the sphere section 31A and the accommodation section slide with respect to each other.

The movement describe above corresponds to a rotational movement about two axes which perpendicularly intersect with the imaginary line 312, and perpendicularly intersect with each other (e.g., a first axis extending in the right-left direction and a second axis extending in the up-down direction). When the right-left direction of Fig. 10 is defined as an X axis, the front-rear direction of Fig. 10 is defined as a Y axis and the up-down direction of Fig. 10 is defined as a Z axis, the movement about the imaginary line 312 is expressed as a rotation Xθ about the X axis, and the movement within the conical face 314 is expressed as a composition of a rotation Yθ about the Y axis and a rotation Zθ about the Z axis. That is, similarly to the first ball joint 2, the second ball joint 3 can move the second ball stud 31 with three degrees of freedom. Since the second ball stud 31 is movable, the second ball joint 3 is movable with the second center line 992 shown in Fig. 2 being the center of movement.

Referring to Figs. 11 and 12, the eye cap 90 will be described. The eye cap 90 is detachably attached to the display device 11. The eye cap 90 is capable of blocking external light. The eye cap 90 has a side wall 901 and a cap engagement part 902. The side wall 901 has a cylindrical shape of which opening is larger at a more rearward portion. The cap engagement part 902 is a part of the front end of the side wall 901 protruding inwardly in the diameter direction. The eye cap 90 is engaged with the display device 11 by arranging the cap engagement part 902 around the attachment/detachment part 17 of the display device 11. With this configuration, the eye cap 90 is arranged around the casing 12, or more specifically, around the attachment/detachment part 17 of the casing 12.

The eye cap 90 is formed, for example, of synthetic resin. When a rear end part of the eye cap 90 closely contacts around the eye of the user, ambient external light is blocked by the eye cap 90. Therefore, visibility of the image passed through the lens unit 6 is improved.

Referring to Figs. 13 - 15, the mirror part 5 will be described. The mirror part 5 is detachable/attachable with respect to the display device 11 (see Figs. 13 and 14). The mirror part 5 is supported by the attachment/detachment part 17 (see Fig. 14). It is noted that, when the mirror part 5 is attached to the display device 11, the orientation of the display device 11 is set such that the optical axis 97 is directed leftward. Accordingly, the longitudinal direction of the casing 12 of the display device 11 extends in the right-left direction.

As shown in Fig. 13, the mirror part 5 has a mirror casing 52, a half mirror 56, and a mirror engagement part 59 (see Fig. 15). The mirror casing 52 has a cylindrical shape extending in the right-left direction, with its rear face being opened. A left end of the mirror casing 52 is inclined in a diagonally right front direction. The left end of the mirror casing 52 is formed with an opening 51 opened in the right-left direction. The half mirror 56 is supported inside the opening 51 of the mirror casing 52. The half mirror 56 is inclined in a diagonally right front direction. A front side of the half mirror 56 is not covered with the mirror casing 52.

As shown in Fig. 15, there are two mirror engagement parts 59 on a right end part of the mirror casing 52, One of the mirror engagement parts 59 is a convex portion protruding downward from the upper part of the mirror casing 52. The other of the mirror engagement parts 59 is a convex portion protruding upward from the lower part of the mirror casing 52. When the mirror part 5 is attached to the display device 11, A rear end part of the mirror casing 52 is arranged around the attachment/detachment part 17 (see Fig. 14). At this stage, the mirror engagement parts 59 engage with the recesses 93 (see Fig. 14) of the display device 11.

A rear surface of the half mirror 56 is referred to as a reflective surface 56A. When the mirror part 5 is attached to the attachment/detachment part 17, the reflective surface 56A of the half minor 56 inclines with respect to the optical axis 97 on the left direction side, the left direction being a direction directed from the image unit 7 toward the lens unit 6. The half mirror 56 is capable of reflecting, with the reflective surface 56A, part of (e.g., 50 % of) the image light emitted by the image unit 7 to a rearward direction which intersects with a direction where the optical axis 97 extends (see arrow 96 in Fig. 13). The eye of the user can visually recognize a virtual image based on the image light reflected by the half mirror 56. Further, the half mirror 56 is capable of allowing part of the external light incident thereon from the front side to pass therethrough toward the rear side.

It is noted that, in the present disclosures, instead of the half mirror 56 described above, another reflective member such as a generally used mirror which does not allow background light to pass therethrough may be used. Further, instead of the half mirror 56, an optical path deflecting member such as a prism or a diffractive grating may be used.

In the present embodiment, the orientation of the display device 11 is differentiated (see Figs. 1 and 13) between a case where the mirror part 5 is detached from the casing 12 of the display device 11 via the attachment/detachment part 17, and a case where the mirror part 5 is attached to the casing 12. According to the present embodiment, in order to change the orientation of the display device 11, different connection members are used.

When the HMD 1 is used with the mirror part 5 being detached from the display device 11, the connection member 81 shown in Fig. 2 is used, and the display device 11 is connected to the connection fixture 9. The connection member 81 connects the display device 11 such that a direction where the second center line 992 extends and the optical axis 97 intersects with each other. It is noted that, in Fig. 2 and the like, only one optical axis 97 is depicted, but there are multiple optical axes 97 of the image emitted from the image unit 7 within a range of the image unit 7, and it is sufficient that the direction where the second center line 992 extends intersects with any one of the multiple optical axes 97. For example, the optical axis 97 exists for each pixel, and therefore, the number of the optical axes 97 is the same as the number of pixels.

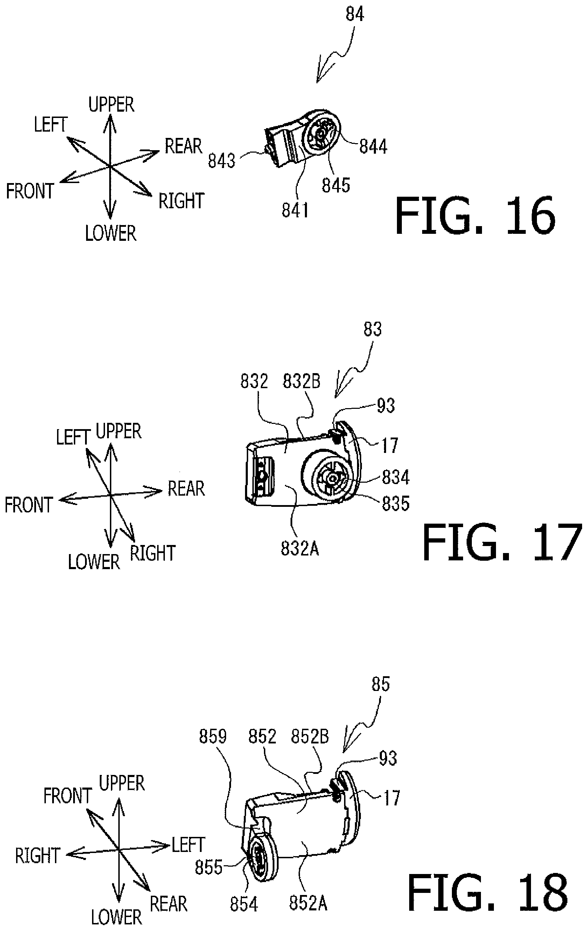

When the HMD 1 is used with the mirror part 5 being attached to the display device 11, the connection member 84 shown in Fig. 13 is used, and the display device 11 is connected to the connection fixture 9. As depicted in Fig. 16, the connection member 84 is a substantially polygonal prism member extending in the front-rear direction. A length of the connection member 84 in the front-rear direction is shorter than a length of the connection member 81 (see Fig. 2). On the front end part of the connection member 84, a protruding portion 843 protruding frontward is provided. As the protruding portion 843 is inserted in a not-shown hole of the second casing 14 (see Fig. 4), the connection member 84 is held by the display device 11.

On a right surface of a rear part of the connection member 84, a connection recess 844 having a circular shape in the left side view and recessed leftward is formed. At a central part of the connection recess 844, a cylindrical section 845 extending rightward is provided. As a connection section (not shown) to be connected to the second ball joint 3 is inserted between an inner surface of the connection recess 844 and an outer surface of the cylindrical section 845, the second ball joint 3 and the connection member 84 are connected (see Fig. 13).

As shown in Fig. 13, the connection member 84 connects the display device 11 such that the direction where the second center line 992 extends and a direction where the optical axis 97 extends become the same. It is noted that, in order to switch usage of the HMD 1 between a case where the HMD 1 is used as the non-transmission type HMD 1 (see Figs. 1 and 2) and a case where the HMD 1 is used as the transmission type HMD 1 (see Fig. 13), only the connection member 81 (see Fig. 2) and the connection member 84 (see Fig. 13) may be exchanged. Alternatively, the display device 11A to which the connection member 81 is connected and the display device 11B to which the connection member 84 is connected may be prepared, and the display device 11A and the display device 11B may be exchanged. Additionally, the connection member which switches the usage between the case where the HMD 1 is used as the non-transmission type HMD and the case where the HMD 1 is used as the transmission type HMD, may be configured with a member capable of moving with one or more degrees of freedom such as a flexible joint. Furthermore, as the connecting member, a member configured to be capable of rotating about a supporting shaft may be used. In such a case, for example, a supporting shaft extending in the up-down direction may be arranged at the front end part of the connection member 81 shown in Fig. 2, and the display device 11 may be configured to rotate about such a supporting shaft.

The HMD 1 according to the present embodiment is formed as described above. In the present embodiment, the connection fixture 9 is movable via the first ball joint 2 and the second ball joint 3. With this configuration, it is possible to place the rear side surface 67 (see Fig. 4) of the lens unit 6 in front of the eye of the user without expanding/contracting the connection fixture 9. Further, since the first center line 991 and the second center line 992 extend in the same direction with respect to the connection fixture 9, in comparison with a case where they extend in different directions, a movable range of the display device 11A with respect to the mounting fixture 8 can be made wider. Accordingly, if the display device 11A is configured such that the optical axis 97 is parallel to the visual axis 98, and the optical axis 97 perpendicularly intersects the surface 67 of the lens unit 6 (see Fig. 4), the user can easily place the display device 11A in front of the eye of the user and move the display unit 11A at a position other than the position in front of the eye of the user. Therefore, usability for the user is improved.

A direction where the second center line 992 extends intersects with the optical axis 97. Since the movable range of the display device 11A is wide according to the present embodiment, even if the direction in which the second center line 992 extends is arranged to intersect with the optical axis 97, the user can easily place the display device 11A in front of the eye of the user. Therefore, the usability for the user is improved.

The adjustment mechanism 4 and the operation member 41 are provided, and adjustment regarding display of the image from the image unit 7 can be performed. According to the present embodiment, when the adjustment mechanism 4 is operated through the operation member 41, a relative position between the lens unit 6 and the image unit 7 is adjusted. With this adjustment, it is possible to adjust diopter. Since the movable range of the display device 11A is wide, it is easy to place the display device 11A in front of the eye, and further, the diopter adjustment can be performed by adjusting the adjustment mechanism 4 through the operation member 41. Therefore, the usability for the user is improved.

The casing 12 of the HMD 1 has the attachment/detachment part 17 to which the mirror part 5 can be detachably attached. With this configuration, the HMD 1 allows the user to select a case where the user visually recognizes the image output by the image unit 7 and displayed through the lens unit 6 directly (see Fig. 1) and a case where the mirror part 5 is attached and the user visually recognizes the image reflected by the half mirror 56 (see Fig. 14) depending on a purpose of usage. Therefore, in comparison with a case where the image display modes cannot be selected depending on the purpose of usage, the usability for the user is improved.

When the mirror part 5 is detached from the display device 11 via the attachment/detachment part 17, the connection member 81 connects the display device 11 such that the direction where the second center line 992 extends and the optical axis 97 intersect with each other (see Fig. 2). With this configuration, the rear side surface 67 of the lens unit 6 (see Fig. 4) can easily be placed in front of the eye of the user (see Fig. 2). Further, when the mirror part 5 is attached to the display device 11 via the attachment/detachment part 17, the connection member 84 connects the display device so that the direction where the second center line 992 extends and a direction where the optical axis 97 extends become the same (see Fig. 13). With this configuration, when the mirror part 5 is detached from the display device 11, the mirror part 5, or more specifically, the half mirror 56 can easily be placed in front of the eye of the user. That is, in either of a case where the user directly views the surface 67 of the lens unit 6, or a case where the user views an image through the mirror part 5, a portion on which the image is displayed can easily be placed in front of the eye of the user. Accordingly, the usability for the user is improved.

Since the attachment/detachment part 17 is provided with the recesses 93, positioning of the mirror part 5 can be performed by engaging the mirror engagement parts 59 of the mirror part 5 with the recesses 93. Further, since portions with which the mirror part 5 is engaged are the recesses 93, when the mirror part 5 is detached from the display device 11, the portions do not protrude from the display device 11. Therefore, in comparison with a case where portions with which the mirror part 5 is engaged are not the recesses 93 but protruding portions, it is safer even if the user moves a portion of the attachment/detachment part 17 of the display device 11 closer to the eyes of the user.

The mounting fixture 8 is arc-shaped so as to be wearable onto the head of the user, and the first ball joint 2 is supported by the mounting fixture 8. Therefore, the HMD 1 is fixed to the head with the arc-shaped mounting fixture 8, and a position of the first ball joint 2 is fixed. Therefore, in comparison with a case where the user can freely determine an attached position, such as, for example, a case where the mounting fixture 8 is mounted on a brim part of a hat or the like, the position of the display device 11 can be stabilized. Therefore, the user can easily place the display device 11 in front of the eye of the user. Accordingly, the usability for the user is improved.

In the above embodiment, the mounting fixture 8 is an example of a "mounting part" of the present disclosures. The display device 11 is an example of a "display unit" of the present disclosures. The image unit 7 is an example of an "image forming part" of the present disclosures. The lens unit 6 is an example of a "display part" of the present disclosures. The connection fixture 9 is an example of a "supporting part" of the present disclosures. The first ball joint 2 is an example of a "first joint" of the present disclosures. The second ball joint 3 is an example of a "second joint" of the present disclosures. The adjustment mechanism 4 and the operation mechanism 41 are examples of an "adjustment part" of the present disclosures. The attachment/detachment part 17 is an example of an "attaching/detaching mechanism" and a "cover attachment/detachment part" of the present disclosures.

It is noted that the present disclosures need not be limited to the above-described embodiment, but various modifications can be made. For example, the HMD 1 is worn on the head of the user with the mounting fixture 8. However, the configuration need not be limited to this. For example, an attachable/detachable mechanism may be provided to a hat of the user, and, with use of such a mechanism, the HMD 1 may be worn on the head of the user.

It is noted that the recesses 93 may not be provided to the attachment/detachment part 17. Further, the eye cap 90 may not be detachably attached to the display device 11. Further, the mirror part 5 may not be attachable/detachable with respect to the display device 11. The attachment/detachment part 17 may not be provided.

According to the present embodiment, as the adjustment part which can perform the adjustment regarding display of the image from the image unit 7, the operation member 41 and the adjustment mechanism 4 are provided, and the operation member 41 and the adjustment mechanism 4 moves the lens unit 6 in the front-rear direction. However, the operation member 41 and the adjustment mechanism 4 may move the image unit 7 in the front-rear direction. Further, the operation member 41 and the adjustment mechanism 4 may move each of the lens unit 6 and the image unit 7 in the front-rear direction to change a relative position therebetween. Further, the display device 11 may not have the operation member 41 or the adjustment mechanism 4, and the relative position between the lens unit 6 and the image unit 7 may be fixed. Further, the adjustment mechanism 4 and the operation member 41 may not be provided. Further, it is sufficient that the adjustment part may be capable of performing any adjustment regarding displaying of an image from the image unit 7, and may be configured, for example, to adjust brightness of the image unit 7. Further, the longitudinal direction of the casing 12 is parallel to the optical axis 97, but the longitudinal direction of the casing 12 may intersect with the optical axis 97.

Further, the shape of the connection member 81 (see Figs. 1 and 2), which is used in the non-transmission type HMD 1 is not limited. Fig. 17 shows a connection member 83 which is a modification of the connection member 81. The connection member 83 is used in the non-transmission type HMD 1. The connection member 83 has a plate-shaped member 832 extending in the front-rear direction. The plate-shaped member 832 is a member arranged in place of the second casing 14 (see Fig. 4) of the display device 11, and forms a part of the casing 12. For this reason, at a rear end part of the plate-shaped member 832, a part of the attachment/detachment part 17 and a part of the recesses 93 are formed. On a left surface 832B of the plate-shaped member 832, the first casing 13 (see Fig. 4) is connected, thereby forming the casing 12 of the display device 11.

On a font part of a right surface 832A of the plate-shaped member 832, a cylindrical section 834 protruding rightward is provided. At a central part inside the cylindrical section 834, a cylindrical section 835 extending rightward from the plate-shaped member 832 is provided. As a connection section (not shown) to be connected to the second ball joint 3 is inserted between an inner surface of the cylindrical section 834 and an outer surface of the cylindrical section 835, the second ball joint 3 and the connection member 84 are connected. The connection member 83 is formed as above. When the connection member 83 is used, the HMD 1 functions as the non-transmission type HMD 1 as in the case shown in Figs. 1 and 2.

Further, the shape of the connection member 84 (see Fig. 14) employed in the transmission type HMD 1 is not limited. Fig. 18 shows a connection member 85 which is a modification of the connection member 84. The connection member 85 is employed in the transmission type HMD 1. The connection member 85 has a plate-shaped member 852 extending rightward. The plate-shaped member 852 is a member arranged in place of the second casing 14 of the display device 11, and forms a part of the casing 12. Therefore, at a left end part of the plate-shaped member 852, a part of the attachment/detachment part 17 and a part of the recesses 93 are formed. On a front surface 852B side of the plate-shaped member 852, the first casing 13 (see Fig. 13) is connected, thereby forming the casing 12 of the display device 11.

On a right part of a rear surface 852A of the plate-shaped member 852, a plate section 859 protruding rearward is provided. On a right surface of a rear part of the plate section 859, a connection recess 854 having a circular shape in the right side view and recessed leftward is formed. At a central part of the connection recess 854, a cylindrical section 855 extending rightward is provided. As a connection section (not shown) to be connected to the second ball joint 3 is inserted between an inner surface of the connection recess 854 and an outer surface of the cylindrical section 855, the second ball joint 3 and the connection member 85 are connected. The connection member 85 is formed as above. When the connection member 85 is used, the HMD 1 functions as the non-transmission type HMD 1 as in the case shown in Fig. 13.

### EXPLANATION OF REFERENCE SIGNS

- 1: HMD
- 2: first ball joint
- 3: second ball joint
- 4: adjustment mechanism
- 5: mirror part
- 6: lens unit
- 7: image unit
- 8: mounting fixture
- 9: connection fixture
- 11, 11A, 11B: display device
- 12: casing
- 17: attachment/detachment part
- 21: first ball stud
- 31: second ball stud
- 41: operation member
- 56: half mirror
- 59: mirror engagement part
- 63: lens
- 78: liquid crystal display device
- 81, 83, 84, 85: connection member
- 89: optical pupil
- 90: eye cap
- 93: recess
- 97: optical axis
- 98: visual axis

## Claims

1. A head-mounted display comprising:
a mounting part configured to be wearable on a head of a user;
a display unit having a display part configured to display an image;
an image forming part provided to the display unit and configured to form an image to be displayed on the display part;
a supporting part configured to support the display unit;
a first joint connecting the mounting part with the supporting part; and
a second joint connecting the supporting part with the display unit,
wherein a first center line and a second center line extend in the same direction with respect to the supporting part, the first center line being a center line of a movable range of the first joint and the second center line being a center line of a movable range of the second joint,
wherein an optical axis of the image forming part perpendicularly intersects with a surface of the display part configured to emit the image, and
wherein the display unit is placed at a position where the optical axis becomes parallel to a visual axis of an optical pupil.

2. The head-mounted display according to claim 1, wherein a direction where the second center line extends intersects with the optical axis.

3. The head-mounted display according to claim 1 or 2, further comprising an adjustment part provided to the display unit and configured to perform adjustment regarding displaying of the image output by the image forming part.

4. The head-mounted display according to any one of claims 1 - 3,
further comprising:
a casing forming an appearance of the display unit, a longitudinal direction of the casing being parallel to the optical axis; and
an attaching/detaching mechanism provided to the casing and capable of detachably attaching a mirror part having a reflective surface configured to reflect light from the image forming part,
wherein the attaching/detaching mechanism is configured to attach the reflective surface so as to be inclined with respect to the optical axis on a side in a direction directed from the image forming part to the display part.

5. The head-mounted display according to claim 4,
further comprising a connection member configured to connect the second joint with the display unit,
wherein, when the mirror part is detached from the casing via the attaching/detaching mechanism, the connection member connects the display unit such that the optical axis intersects with a direction where the second center line extends,
wherein, when the mirror part is attached to the casing via the attaching/detaching mechanism, the connection member connects the display unit such that a direction where the optical axis extends becomes the same as the direction where the second center line extends.

6. The head-mounted display according to claim 4 or 5, further comprising a recess provided to the attaching/detaching mechanism and configured to engage with an engagement part provided to the mirror part.

7. The head-mounted display according to any one of claims 4 - 6, further comprising a cover attachment/detachment part provided to the casing and configured to detachably attach a cover part which is arranged around the casing to block external light.

8. The head-mounted display according to any one of claims 1 - 7,
wherein the mounting part is an arc-shaped part which can be worn along the head of the user, and
wherein the first joint is supported by the mounting part.
